Europäisches Patentamt

European Patent Office

Office européen des brevets

(11) Publication number: **0 091 751**
**B1**

(12) **EUROPEAN PATENT SPECIFICATION**

(45) Date of publication of patent specification: **06.05.87**

(21) Application number: **83301715.5**

(22) Date of filing: **28.03.83**

(51) Int. Cl.⁴: **C 10 G 3/00, B 01 J 8/26**

(54) Fluidized bed reactor and process for oxygenates to hydrocarbons conversion.

(30) Priority: **08.04.82 US 366814**
**08.04.82 US 366815**

(43) Date of publication of application:
**19.10.83 Bulletin 83/42**

(45) Publication of the grant of the patent:
**06.05.87 Bulletin 87/19**

(84) Designated Contracting States:
**BE DE FR GB IT NL**

(56) References cited:
**US-A-4 197 418**
**US-A-4 251 484**

(73) Proprietor: **MOBIL OIL CORPORATION**
**150 East 42nd Street**
**New York New York 10017 (US)**

(72) Inventor: **Avidan, Amos Andrew**
**14 Spring Hill Road**
**Mantua, NJ 08051 (US)**
Inventor: **Kam, Anthony Yuk-Yin**
**18 S. Birchwood Park Drive**
**Cherry Hill, NJ 08003 (US)**

(74) Representative: **Cooper, John Anthony et al**
**Mobil Court 3 Clements Inn**
**London WC2A 2EB (GB)**

Courier Press, Leamington Spa, England.

## Description

This invention relates to an improved fluidized catalytic bed reactor and process for conversion of lower alcohols and related oxygenates to hydrocarbons, such as gasoline-grade hydrocarbons or olefins. More particularly, the invention relates to an improved reactor and process utilizing the reactor which decrease the formation of undesirable by-products of the reaction, and increases conversion and selectivity of the reaction.

It was recently discovered that lower aliphatic organic oxygen-containing compounds (such as lower alcohols such as methanol) can be converted to gasoline-grade hydrocarbons by contacting the feed with newly discovered zeolite catalysts (such as those disclosed in U.S. Patent 3,998,898. The catalysts used in the reaction have the silica ($SiO_2$) to alumina ($Al_2O_3$) molar ratio of at least 12, a constraint index of about 1 to 12, and a crystal density of at least 1.6 grams per cubic centimeter ($g/cm^3$). The conversion reaction is carried out at a temperature of at least 500°F (260°C), at a pressure of 101.3 to 20265 kPa (1 to 200 atmospheres) and at 0.5 to 50 liquid hourly space velocity (LHSV), as set forth in the aforementioned patent. The gasoline-grade hydrocarbon yield is about 10% to about 70%, with the remainder of the process effluent comprising unreacted feed, water, higher alkane and alkene hydrocarbons of 2 to 9 carbons and aromatic hydrocarbons. Some of the higher hydrocarbons and aromatic hydrocarbons, such as 1,2,4,5-tetramethyl benzene or durene, are undesirable byproducts because of their high melting points which requires limiting the amount of these compounds in the gasoline product for satisfactory driveability properties. Previously proposed reactor designs for carrying out the conversion of oxygenates to gasoline utilized fluidized bed reactors having solid-gas separation means such as a series of cyclones, in the upper portion of the reactor (U.S. Patent No. 4,197,418; U.S. Patent No. 4,071,573; and, U.S. Patent No. 3,998,899). The catalyst entrained with the gaseous products of the reaction was continuously separated therefrom in the solid-gas separation means (cyclones). The recovered catalyst, which contained higher hydrocarbons and aromatics entrained on its surface, was then returned directly to the fluidized bed in the lower portion of the reactor, by means such as cyclones' diplegs. Continuous separation of the catalyst from the gaseous products in the reactor vessel required a substantial freeboard, or physical area for the disengagement of the catalyst from the gaseous products and for the return thereof to the fluidized bed in the lower section of the reactor. The quantity of catalyst falling back to the dense fluidized bed from the freeboard is significant at superficial gas velocities of .30 to 1.5 m/s (1—5 fps), which is a typical operating range for the conversion of oxygenates to gasoline. The returned catalyst moved downwardly, mostly near the reactor wall region, and enhances solid circulation and back-mixing in the reactor. This catalyst reflux increases the contact time of the aromatics-containing catalyst with fresh feed, thereby increasing the formation of the aforementioned undesired higher alkane and alkene hydrocarbons and aromatics, and decreasing the conversion of the feed and selectivity of the reaction.

The present invention provides a process for converting a $C_1$—$C_4$ monohydric alcohol or a related oxygenate into a product selected from those comprising predominantly gasoline boiling range hydrocarbons and those comprising predominantly olefinic hydrocarbons, which comprises the steps of

contacting in a reactor a feed comprising the alcohol or related oxygenate with a catalyst comprising a ZSM-5 type zeolite as a dense fluidized bed of catalyst particles;

continuously passing a mixture of catalyst particles, reaction products and unreacted feed from the reactor to a separate stripper/separator vessel separating catalyst particles from reaction products and unreacted feed;

stripping from the catalyst paraffin, olefin, naphthene and aromatic products of the reaction, absorbed on or entrained in the catalyst particles; and

continuously passing stripped catalyst particles to the dense fluidized bed, characterized in that conditions in the dense fluidized bed approach plug flow conditions, that at least 80% of the reactor volume is occupied by the dense fluidized bed and that catalyst and reaction products are removed together from the reactor.

Figure 1 is a schematic drawing of one embodiment of this invention utilizing a heat exchange means in the stripper/separator vessel.

Figure 2 is a schematic drawing of an alternative embodiment of this invention utilizing a heat exchange means in the fluidized bed reactor vessel.

The reactants used in the process and apparatus of the invention are lower monohydric alcohols, aldehydes, simple and mixed ether derivatives, other oxygenates of 1—4 carbon atoms or mixtures thereof, which can be converted to hydrocarbons including olefins and gasoline-grade hydrocarbons, by contacting the feed with a ZSM-5 type zeolite. A suitable feedstock used in this invention is any suitable oxygenate which can be converted to high octane gasoline boiling range components, as disclosed in U.S. Patent Nos. 3,965,205; 3,904,508; 3,894,106; 3,894,107; 4,138,442; 4,148,835; 4,311,865; and 4,079,095.

In one embodiment of the present invention, the process is conducted to produce a product comprising predominantly olefin hydrocarbons defined herein as the product comprising at least 25% by weight, on the basis of the total product hydrocarbon content, of olefin hydrocarbons having two or more carbon atoms ($C_2^+$). The remainder of such product comprises primarily gasoline boiling point range hydrocarbons of ten or less carbon atoms ($C_{10}^-$), and about 10% of $C_1$—$C_5$ paraffins.

In an alternative embodiment of the present invention, the process is conducted to produce a product comprising predominantly gasoline boiling point range hydrocarbons. Such product comprises 30% to 80% by weight, on the basis of the total product hydrocarbon content, gasoline boiling point hydrocarbons. The remainder of such product comprises paraffins and olefins.

The ZSM-5 type zeolites useful in the process of this invention comprise a special class of zeolites exhibiting some unusual properties. These zeolites induce profound transformations of aliphatic hydrocarbons to aromatic hydrocarbons in commercially desirable yields, and are generally highly effective in alkylation, isomerization, disproportionation and other reactions involving aromatic hydrocarbons. Although the ZSM-5 type zeolites have unusually low alumina contents, i.e., high silica to alumina ratios, they are very active even with silica to alumina ratios exceeding 30. This activity is surprising since catalytic activity of zeolites is generally attributed to framework aluminum atoms and cations associated with these aluminum atoms. These zeolites retain their crystallinity for long periods in spite of the presence of steam even at high temperatures which induce irreversible collapse of the crystal framework of other zeolites, e.g., of the X and A type. Furthermore, carbonaceous deposits, when formed, may be removed by burning at higher than usual temperatures to restore activity. In many environments, the zeolites of this class exhibit very low coke forming capability, thereby making them especially useful in processes requiring relatively long times on stream between regeneration cycles.

An important characteristic of the crystal structure of this class of zeolites is that it provides constrained access to, and egress from, the intra-crystalline free space by virtue of having a pore dimension greater than about $5 \times 10^{-10}$ m (5 Angstroms) and pore windows of about a size which would be provided by 10-membered rings of oxygen atoms. It is to be understood, of course, that these rings are those formed by the regular disposition of the tetrahedra making up the anionic framework of the crystalline aluminosilicate, the oxygen atoms themselves being bonded to the silicon or aluminum atoms at the centers of the tetrahedra. Briefly, the preferred ZSM-5 type zeolites useful as catalysts in this invention possess, in combination: a silica to alumina ratio of at least about 12; and a structure providing constrained access to the crystalline free space.

The silica to alumina ratio referred to may be determined by conventional analysis. This ratio is meant to represent, as closely as possible, the ratio in the rigid anionic framework of the zeolite crystal and to exclude aluminum in the binder or in cationic or other form within the channels. Although the ZSM-5 type zeolites with a silica to alumina ratio of at least 12 are useful, it is preferred to use the ZSM-5 type zeolites having higher ratios of at least about 30. Such zeolites, after activation, acquire an intracrystalline sorption capacity for normal hexane which is greater than that for water, i.e., they exhibit hydrophobic properties. It is believed that this hydrophobic character is advantageous in the conversion of oxygenates to gasoline-grade hydrocarbons.

The zeolites useful as catalysts in this invention freely sorb normal hexane and have a pore dimension greater than about 5 Angstroms. In addition, their structure must provide constrained access to some larger molecules. It is sometimes possible to judge from a known crystal structure whether such constrained access exists. For example, if the only pore windows in a crystal are formed by 8-membered rings of oxygen atoms, then access by molecules of larger cross-section than normal hexane is substantially excluded and the zeolite is not of the desired type. Zeolites with windows of 10-membered rings are preferred, although excessive puckering or pore blockage may render these zeolites substantially ineffective. Zeolites with windows of 12-membered rings do not generally appear to offer sufficient constraint to produce the advantageous conversions desired in the oxygenates-to-gasoline conversion, although such structures can be conceived, due to pore blockage or other causes, that may be operative.

Rather than attempt to judge from crystal structure whether or not a zeolite possesses the necessary constrained access, a simple determination of the "constraint index" may be made by continuously passing a mixture of equal weight of normal hexane and 3-methylpentane over a small sample, approximately 1 gram or less, of zeolite at atmospheric pressure according to the following procedure. A sample of the zeolite, in the form of pellets or extrudate, is crushed to a particle size about that of coarse sand and mounted in a glass tube. Prior to testing, the zeolite is treated with a stream of air at 538°C (1000°F) for at least 15 minutes. The zeolite is then flushed with helium and the temperature is adjusted to between 288°C and 510°C (550°F and 950°F) to give an overall conversion between 10 and 60%. The mixture of hydrocarbons is passed at 1 liquid hourly space velocity (i.e., 1 volume of liquid hydrocarbon per volume of catalyst per hour) over the zeolite with a helium dilution to give a helium to total hydrocarbon mole ratio of 4:1. After 20 minutes on stream, a sample of the effluent is taken and analyzed, most conveniently by gas chromatography, to determine the fraction remaining unchanged for each of the two hydrocarbons.

The "constraint index" is calculated as follows:

$$\text{Constraint Index} = \frac{\log_{10} (\text{fraction of n-hexane remaining})}{\log_{10} (\text{fraction of 3-methylpentane remaining})}$$

The constraint index approximates the ratio of the cracking rate constants for the two hydrocarbons. Catalysts suitable for the present invention are those which employ a zeolite having a constraint index of from 1.0 1o 12.0. Constraint index (CI) values for some typical zeolites, including some which are not useful in this invention are:

3

0 091 751

| Zeolite | C.I. |
|---|---|
| ZSM-5 | 8.3 |
| ZSM-11 | 8.7 |
| ZSM-35 | 4.5 |
| TMA Offretite | 3.7 |
| ZSM-12 | 2 |
| ZSM-38 | 2 |
| Beta | 0.6 |
| ZSM-4 | 0.5 |
| Acid mordenite | 0.5 |
| REY | 0.4 |
| Amorphous silica-alumina | 0.6 |
| Erionite | 38 |

The above-described constraint index is an important and even critical, definition of those zeolites which are useful to catalyze the instant process. The very nature of this parameter and the recited technique by which it is determined, however, admit of the possibility that a given zeolite can be tested under somewhat different conditions and thereby have different constraint indices. Constraint index seems to vary somewhat with severity of operation (conversion). Therefore, it will be appreciated that it may be possible to so select test conditions to establish multiple constraint indices for a particular given zeolite which may be both inside and outside the above defined range of 1 to 12.

Thus, it should be understood that the constraint index value as used herein is an inclusive rather than an exclusive value. That is, a zeolite when tested by any combination of conditions within the testing definition set forth above to have a constraint index of 1 to 12 is intended to be included in the instant catalyst definition in spite of the fact that the same identical zeolite tested under other defined conditions may give a constraint index values outside of 1 to 12.

The class of zeolites defined herein as ZSM-5 type is exemplified by ZSM-5, ZSM-11, ZSM-12, ZSM-23, ZSM-35, ZSM-38, ZSM-48, and other similar materials.

ZSM-5 is described in U.S. Patent No. 3,702,886; ZSM-11 is described in U.S. Patent No. 3,709,979; ZSM-12 is described in U.S. Patent No. 3,832,449; ZSM-23 is described in U.S. Patent 4,076,842; ZSM-35 is described in U.S. Patent 4,016,245; ZSM-38 is described in U.S. Patent 4,046,859; and ZSM-48 is described in European Patent Application No. 800,300,463, published September 3, 1980 as Publication No. 0,015,132.

The specific zeolites listed above, when prepared in the presence of organic cations, are substantially catalytically inactive, possibly because the intracrystalline free space is occupied by organic cations from the forming solution. They may be activated by heating in an inert atmosphere at 538°C (1000°F) for 1 hour, for example, followed by base exchange with ammonium salts followed by calcination at 538°C (1000°F) in air. The presence of organic cations in the forming solution may not be absolutely essential to the formation of this special type of zeolites; however, the presence of these cations does appear to favor the formation of this type of zeolite. More generally, it is desirable to activate this type of zeolite by base exchange with ammonium salts, followed by calcination in air at about 538°C (1000°F) for from 15 minutes to 24 hours.

Natural zeolites may sometimes be converted to this type of zeolite by various activation procedures and other treatments, such as base exchange, steaming, alumina extraction and calcination, alone or in combination. Natural minerals which may be so treated include ferrierite, brewsterite, stilbite, dachiardite, epistilbite, heulandite and clinoptiololite. The preferred crystalline aluminosilicates are ZSM-5, ZSM-11, ZSM-12, ZSM-23, ZSM-35 and ZSM-38, with ZSM-5 being particularly preferred.

The zeolites used as catalysts in this invention may be in the hydrogen form or they may be base exchanged or impregnated to contain ammonium or a metal cation complement. It is desirable to calcine the zeolite after base exchange. The metal cations that may be present include any of the cations of the metals of Groups I through VIII of the Periodic Table of Elements (Fisher Scientific Company Catalog Number 5—702—10, published in 1978). However, in the case of Group IA metals, the cation content should in no case be so large as to substantially eliminate the activity of the zeolite for the catalysis being employed in the instant invention. For example, a completely sodium exchanged H-ZSM-5 appears to be largely inactive for shape selective conversions required in the present invention.

In a preferred aspect of this invention, the zeolites useful as catalysts herein are selected as those having a crystal framework density, in the dry hydrogen form, of not substantially below about 1.6 grams per cubic centimeter. Therefore, the preferred catalysts of this invention are those comprising zeolites having a constraint index as defined above of about 1 to 12, a silica to alumina ratio of at least 12, and a dried crystal density of not substantially less than 1.6 grams per cubic centimeter. The dry density for known structures may be calculated from the number of silicon plus aluminum atoms per 1000 cubic Angstroms. This is described on page 10 of W. W. Meier's article on zeolite structure, included in "Proceedings of the Conference on Molecular Sieves", London, April, 1967, published by the Society of Chemical Industry, London, 1968. When the crystal structure is unknown, the crystal framework density may be determined by classical pyknometer techniques. For example, the crystal framework density may

4

# 0 091 751

be determined by immersing the dry hydrogen form of the zeolite in an organic solvent which is not sorbed by the crystal. It is possible that the unusual sustained activity and stability of this class of zeolites is associated with its high crystal anionic framework density of not less than about 1.6 grams per cubic centimeter. This high density, of course, must be associated with a relatively small amount of free space within the crystal, which might be expected to result in more stable structures. This free space, however, seems to be important as the locus of catalytic activity.

Crystal framework densities of some typical zeolites, including some which are not useful in this invention are:

| Zeolite | Void volume | Framework density |
|---------|-------------|-------------------|
| Ferrierite | 0.28 cc/cc | 1.76 g/cc |
| Mordenite | 0.28 | 1.70 |
| ZSM-5, -11 | 0.29 | 1.79 |
| Dachiardite | 0.32 | 1.72 |
| L | 0.32 | 1.61 |
| Clinoptilolite | 0.34 | 1.71 |
| Laumontite | 0.34 | 1.77 |
| ZSM-4 (Omega) | 0.38 | 1.65 |
| Heulandite | 0.39 | 1.69 |
| P | 0.41 | 1.57 |
| Offretite | 0.40 | 1.55 |
| Levynite | 0.40 | 1.54 |
| Erionite | 0.35 | 1.51 |
| Gmelinite | 0.44 | 1.46 |
| Chabazite | 0.47 | 1.45 |
| A | 0.50 | 1.30 |
| Y | 0.48 | 1.27 |

In practicing the process of the present invention, it is useful to incorporate the above-described crystalline zeolite with a matrix comprising another material resistant to the temperature and other conditions employed in the process. Such matrix material is useful as a binder and imparts greater resistance to the catalyst for the severe temperature, pressure and reactant feed stream velocity conditions encountered in many conversion processes.

Useful matrix materials include both synthetic and naturally occurring substances, as well as inorganic materials such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families, which families include the sub-bentonites and the kaolins commonly known as Dixie, McNamee-Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolites employed herein may be composited with a porous matrix material, such as alumina, silica-alumina, silica-magnesia, silica-zirconia, silica-thoria, silica-beryllia, and silica-titania, as well as ternary compositions, such as silica-alumina-thoria, silica-alumina-zirconia, silica-alumina-magnesia and silica-magnesia-zirconia. The matrix may be in the form of a cogel. The relative proportions of zeolite component and inorganic oxide gel matrix, on an anhydrous basis, may vary widely with the zeolite content ranging from between about 1 to 99 percent by weight and more usually in the range of about 5 to about 80 percent by weight of the dry composite.

5

The reactor vessel of the present invention is a fluid bed reactor preferably comprising a riser section or portion in the bottom or upstream portion thereof, in which the feedstock is initially mixed and reacted over the catalyst, and an upper or downstream section or portion, following the riser, wherein the catalyst forms a fluidized dense bed with the feed. The mixture of catalyst and feed, initially contacted in the riser, is conducted to the downstream portion, which is usually larger in diameter than the riser of the reactor. The process and apparatus of the present invention is operated under such conditions that substantially the entire volume of the reactor is occupied by a mixture of catalyst, the reactants, and the products of the reaction. The mixture is conducted into the downstream portion of the reactor under such conditions that the flow conditions in this downstream portion of the reactor approach plug flow reactor characteristics, rather than dense fluidized bed reactor characteristics of the prior art reactors. The mixture flows upwardly, if the reactor is positioned vertically. The mixture of reactants and the catalyst proceeds from the relatively narrow riser to a relatively wide downstream section of the reactor and fills substantially the entire volume thereof. The aromatics are stripped from the catalyst in a separate stripper/separator vessel operatively connected to the downstream section of the reactor, as described in detail below. This manner of operating the reactor eliminates the necessity for a substantial freeboard above the surface of a dense fluidized bed in the reactor vessel present in prior art reactors such as U.S. Patent No. 4,197,418. The elimination of the freeboard and the operation of the reactor at the flow conditions approaching plug flow reactor substantially eliminates catalyst reflux or back mixing and recycle of the catalyst into the dense fluidized catalyst bed before aromatic hydrocarbons are stripped from the catalyst.

In the riser reactor, the suspension of feed and catalyst proceeds through the riser at an approximate gas velocity of .91 to 24.3 m/s (3 to 60 f/s), preferably 1.52 to 12.1 m/s (5 to 30 f/s). Once the suspension leaves the riser, it enters a relatively wider upper area or portion of the reactor, wherein it proceeds at a gas velocity of 0.15 to 8.1 m/s (0.5 to 20 f/s), preferably .30 to 2.13 m/s (1 to 7 f/s). The temperature in the riser and in the relatively wider upper portion of the reactor is 260°C to 427°C (500°F to 800°F), depending on the required product. For example, if it is desired to maximize the production of gasoline-grade hydrocarbons, the reaction is conducted at 343°C to 427°C (650°F to about 800°F). Conversely, to maximize the production of $C_2+$ olefins, the reaction is conducted at 260°C to 399°C (500°F to 750°F). The pressure in the reactor is 135.8 to 285.9 kPa (5 to 400 psia). The coke load on the catalyst is 0 to 45 percent by weight, preferably 0 to 30 percent by weight. In this connection, the riser portion of the reactor has a length of 3.0 to 21.3 meters (10 to 70 feet), preferably 6.1 to 15.2 meters (20 to 50 feet). The upper portion of the reactor has a length of 1.5 to 18.3 meters (5 to 60 feet), preferably 3.0 to 12.2 meters (10 to 40 feet). Operating the reactor at the aforementioned conditions of velocity assures that the reaction proceeds under conditions approaching plug flow characteristics in the lower and upper portions of the reactor vessel.

As mentioned above, the fluidized dense bed comprised of the catalyst, reactants, and products of the reaction occupies substantially the entire volume of the upper portion of the reactor vessel. The term "substantially the entire volume of the upper portion of the reactor vessel" as used herein and in the appended claims designates at least 80%, preferably 95—100% of the upper portion of the vessel. However, as mentioned above, such proportion of the upper portion of the vessel must be occupied that there is substantially no opportunity for catalyst particles, containing entrained higher alkanes, alkenes and aromatic products of the reaction, to be refluxed back into the fluidized bed. Preferably, the reactor has a minimal freeboard region of 0 to 1.5 meters (0 to 5 feet), most preferably 0 to 0.6 meters (0 to 2 feet). The upper portion of the reactor may also be separated, if desired, from the riser by a distributor grid, commonly used in the art, to aid in dispersing the catalyst and the feed. The upper portion of the reactor vessel may also contain conventional baffle means, such as angular baffle or honeycomb sections, placed in the reactor.

After passing through the reactor, the suspension is conducted to a separate stripper/separator vessel wherein gaseous products of the reaction are separated from the catalyst, and, subsequently, entrained and adsorbed hydrocarbons, including paraffins, olefins, naphthenes and aromatic compounds, are stripped from the catalyst. The catalyst is separated from the gaseous products of the reaction by any conventional solid-gas separation means, such as by at least one cyclone. Alternatively, sintered metal filters, used alone or in combination with cyclones, may also be used to separate catalyst from the gaseous reaction products. In any event, after the catalyst is separated from the gaseous products of the reaction, the catalyst is returned, by any convenient means, such as cyclone diplegs, into a lower portion of stripper/separator vessel, wherein a fluidized bed of catalyst is formed. In this fluidized bed of catalyst, hydrocarbons, including paraffins, olefins, naphthenes and aromatics, adsorbed on the catalyst and entrained in the interstitial volume of the catalyst bed, are removed therefrom by a stripping gas, preferably introduced into the fluidized bed countercurrently to the flow of the fluidized bed. The hydrocarbons removed from the catalyst are then conducted to the solid-gas separation means, described above, from which they are conducted to an appropriate downstream product recovery apparatus, such as a separator or a fractionation column. The upper portion of the stripper/separator vessel containing the solid-gas separation means is defined herein as the upper about 10% to about 60%, preferably the upper 30% to 50% of the stripper/separator vessel. The bottom portion of the stripper/separator vessel containing the fluidized catalyst bed is defined herein as the lower 40% to 90%, preferably 50% to 70% of the vessel.

Catalyst separated from the gaseous products of the reaction, and subsequently stripped of hydrocarbons, is continuously removed from the lower portion of the stripper/separator vessel, and is continuously recirculated into the inlet of the riser, wherein it is admixed with fresh feed in a suitable mixing device, such as a lift pot. The mixing device disperses the catalyst with the feed, and the thus-formed suspension is then conducted into the upper portion of the reactor vessel, as described above. Steady state operation in the stripper/separator vessel is achieved by continuously conducting a mixture of the catalyst, unreacted feed material and products of the reaction from the reactor outlet to the stripper/separator vessel. A conduit introducing the mixture into the stripper/separator vessel may be equipped with a suitable preliminary solids-gas separation device, such as a knockdown plate, to accomplish a preliminary separation of the catalyst from the gaseous products of the reaction.

A portion of the catalyst is continuously recirculated from the reactor vessel to a regenerator vessel for regenerating the catalyst in any conventional manner. The method of regenerating the catalyst used in the process of this invention is that conventionally used in the art for the catalyst used herein, as described in the prior art patents set forth above. After the catalyst is regenerated, it is continuously recirculated to the reactor vessel.

To maintain thermal balance of the reaction, which is exothermic in nature, a heat exchange means may be provided in the reactor vessel or in the stripper/separator vessel. A suitable heat exchange means is a conventional heat exchanger, for example, comprising a series of tubes immersed in the fluidized bed of the reactor, or in the fluidized bed of the stripper/separator, with a cooling fluid being conducted through the tubes. The precise location of the heat exchange means within either the reactor vessel or the stripper/separator vessel and the choice of the cooling liquid and its rate of flow will be dictated by operational and economic considerations for a given installation, as will be apparent to those skilled in the art.

It will also be apparent to those skilled in the art that the various conduits of the apparatus assembly, e.g., those conducting the spent catalyst from the reactor to the regenerator; the regenerated catalyst from the regenerator to the reactor; the suspension comprising the catalyst, the products of the reaction and the unreacted material into the stripper/separator vessel; and, the stripped separated catalyst from the stripper/separator vessel into the reactor, may be equipped with conventional valves controlling the rate of flow of the respective streams. Similarly, any convenient medium may be used in the stripper/separator vessel and in the regenerator vessel for stripping hydrocarbons and for regenerating the catalyst, respectively, in those vessels.

The reactor vessel used in this invention may have the construction of the riser reactor, as described above, and thus operate in a fluidization regime known in the art as a turbulent fluidization regime (superficial gas velocities of 0.15 to 3.0 m/s, preferably 0.3 to 1.5 m/s, and bed densities of 240.3 to 721. kg/m$^3$). Alternatively, the upper portion of the reactor vessel may be of the same or similar diameter as the reactor riser, thereby operating in the fast fluidization regime (superficial gas velocities of 1.5 to 6.0 m/s and bed densities of 64.1 to 400.5 kg/m$^3$). In both cases however, the reactor has a minimal freeboard region of 0 to 1.5 meters (0 to 5 feet), preferably 0 to 0.6 meters (0 to 2 feet). Conversion of lower alcohols and other oxygenates in the process of the present invention assures a relatively high yield of gasoline-grade hydrocarbons or olefins and relatively high conversion rates and selectivity of the process, because the catalyst separated from the gaseous products of the reaction in the stripper/separator vessel is returned to the fluidized bed in that vessel, rather than to the fluidized bed in the reactor. This method of operation substantially assures that higher hydrocarbons-containing catalyst does not come in contact with fresh feed, thereby substantially eliminating the major cause of formation of additional quantities of higher hydrocarbons. Accordingly, the rate of the reaction and selectivity thereof are increased. The term "selectivity" is used herein to define the percentage of conversion of the feed to the desired products of the reaction. Thus, high selectivity of the process, designates high yield of the gasoline-grade hydrocarbons or of olefins.

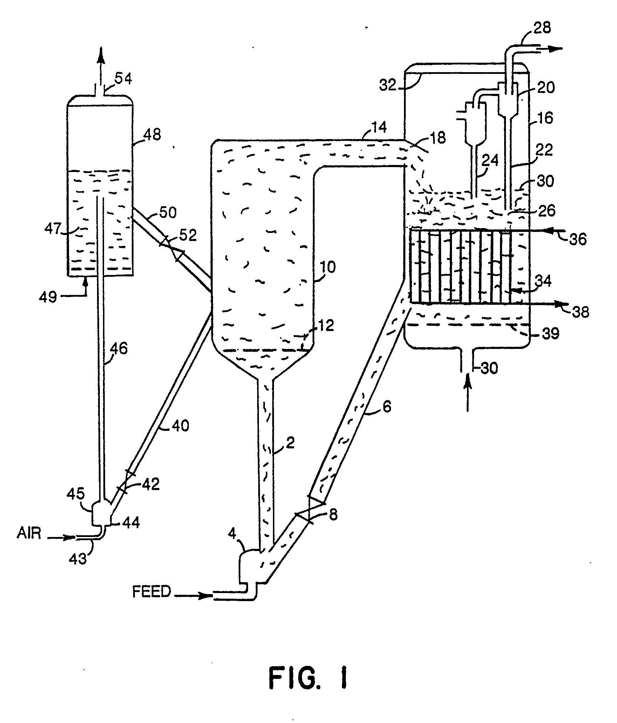

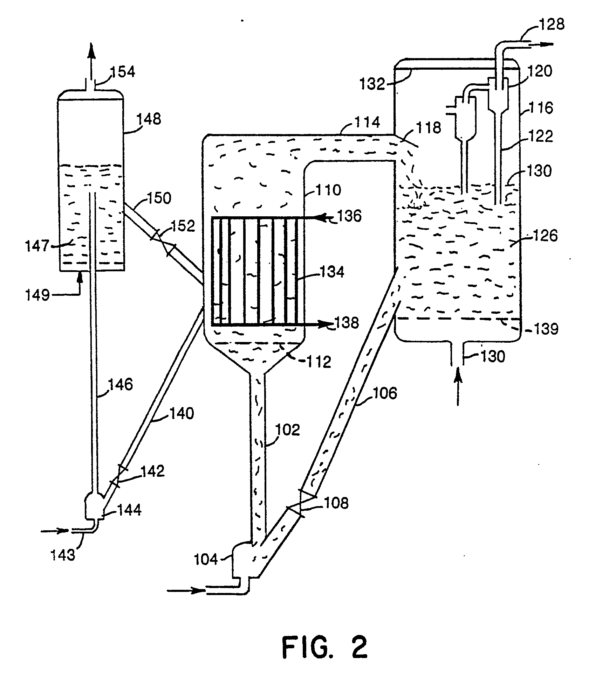

The invention will now be described in conjunction with two exemplary embodiments thereof illustrated in Figures 1 and 2.

Figure 1 illustrates one embodiment of the present invention in which exothermic heat of the reaction is removed therefrom in an external stripper/separator vessel. The feed, comprising lower alcohols, optionally other oxygenates such as Fischer-Tropsch products or ethers, and usually water, enters the reactor riser 2 at the bottom, preferably through a liquid-solids mixing device, or lift pot, 4. The feed is mixed with a stripped catalyst conducted from the stripper/separator to the lift pot through a standpipe 6, equipped with a valve 8. The catalyst-feed suspension proceeds downstream through the riser into the reactor 10. The riser is operated either in a so-called dilute conveying regime, with solid density of 16.0 to 80.1 kg/m$^3$ (1 to 5 lb/cu ft.), or in the fast-fluidization regime, with solid density of 80.1 to 400.5 kg/m$^3$ (5 to 25 lb/cu ft.), depending on the solid circulation rate required for a given installation. The superficial fluid velocity in the riser is 0.9 to 18.3 m/s (3 to 60 ft/sec), preferably 1.5 to 9.1 m/s (5 to 30 ft/sec), depending on the riser diameter and the required throughput. The riser can be separated from the upper portion of the reactor 10 by a distributor grid 12, which assures good gas-solid distribution in case of a large difference between the top and bottom reactor diameters. The suspension comprising the catalyst and the hydrocarbon feed proceeds downstream in the upper portion of the reactor until it reaches the top thereof and exits through a conduit 14 into a stripper/separator vessel 16. Conduit 14 can enter the vessel 16 tangentially, and may be equipped with a knockdown plate 18, shown in Figure 1. The plate 18 thus acts as a preliminary cyclone separator to recover a portion of the entrained catalyst from the suspension of the

**0 091 751**

catalyst and the hydrocarbons. The remaining catalyst is separated from the gaseous reaction products in vessel 16 by at least one stage of solid-gas separating equipment, such as cyclones 20, or sintered metal filters (not shown in Figure 1) in addition or instead of the first stage cyclone. The catalyst is returned by diplegs 22 and 24 to the lower portion of the vessel 16, wherein it forms a fluidized bed 26. The gaseous products of the reaction separated in the cyclones 20 are removed from the vessel 16 by a conduit 28. The catalyst is passed downwardly through the stripping zone countercurrently to the stripping and fluidizing gas introduced into the stripping zone through a conduit 30. Light product gases, nitrogen or steam may be used as the stripping and fluidizing gas. The bed of catalyst in the vessel 16 acquires an upper bed level 30. The term freeboard in the vessel 16 designates the vertical space from the upper bed level 30 to the upper level 32 of the stripper/separator vessel 16. This space is necessary for disengaging the catalyst from the gaseous reaction products and for returning it to the bed 26. The catalyst is returned to the dense bed in the stripper/separator vessel before it is recycled to the reactor vessel 10. Accordingly, the contact of the higher hydrocarbon-containing catalyst with the feed of the reaction is minimized, thereby, also minimizing the formation of higher hydrocarbons, including aromatics, such as durene.

In the lower portion of the vessel 16, there is provided a heat exchange means 34 having a coolant inlet means 36 and a coolant outlet means 38. The coolant may be any conventionally used fluid whose heat capacity is sufficient to remove the necessary amount of thermal energy, generated in the process, from the catalyst. Suitable fluids are water, glycols, "Dowtherm" (trademark of Dow Chemical Co.) or any other heat transfer fluid used in conventional process heat removal. The catalyst is cooled in the vessel 16 from a temperature of 399°C (750°F) to a temperature of 288°C to 343°C (550°F to 650°F), preferably 316°C (600°F). The stripped and cooled catalyst is withdrawn from the bottom of the stripper 16 by a conduit 6 communicating with the riser 2, as discussed above.

The catalyst is regenerated in a regeneration vessel 48 into which it is continuously conducted by a standpipe 40 equipped with a valve 42. The spent catalyst from the reactor vessel 10 is mixed in the upstream section of the riser 46 by any suitable means 45 with a fluidizing gas, such as air, nitrogen or a mixture of air and nitrogen entering through a conduit 43. A suspension of spent catalyst and gas is passed upwardly to the riser 46 into the upper portion of the regenerator 48, wherein it forms a fluid bed of catalyst 47. Additional fluidizing gas may be introduced into the regenerator through a conduit 49 to aid in the fluidization of the regenerator catalyst bed and in controlling the temperature of the regenerator. Regeneration of the catalyst is usually accomplished at a temperature of at least 371°C (700°F). It is preferred to maintain the temperature as low as possible for achieving some limited and desired amount of coke removal from the catalyst. Regeneration flue gas is removed by a conduit 54, and the regenerated catalyst is removed by a standpipe 50, equipped with a valve 52. The regenerated catalyst in the conduit 50 may be cooled, if necessary, by an indirect heat exchange means, not shown in the drawing for clarity, before passing to a catalyst mixing zone 4 for admixture with recycled catalyst. It will be apparent to those skilled in the art that variations in the catalyst regeneration operation or apparatus may be employed. For example, a riser regeneration apparatus and method as disclosed in U.S. Patent 3,351,548 may be utilized, or a combination of dense fluid bed catalyst regeneration and riser regeneration similar to that disclosed in U.S. Patent 3,926,778 and 4,118,338 may be employed. Additionally, a portion of the catalyst to be regenerated may be withdrawn from a different portion of the reactor than that shown in Figure 1, such as from a portion closer to the distributor grate 12, and the regenerated catalyst may be admixed with the feed and the stripped catalyst at a different point in the riser 2. As briefly mentioned above, the regenerated catalyst in conduit 50 may be initially preheated before it is used in the reactor 10. The catalyst can be preheated by any conventional means, such as an in-line indirect heat exchange means known to those skilled in the art.

Figure 2 illustrates an alternative embodiment of the invention wherein the exothermic heat of the reaction is removed in the reactor vessel. All of the composite parts of the apparatus of Figure 2 are numbered in the same manner as those of the embodiment of Figure 1, with the addition of a prefix 100. Heat exchanging means 134 is placed in the reactor vessel 110 to remove excessive heat generated in the exothermic reaction. Otherwise, the operation of the embodiment of Figure 2 is substantially similar to that of the embodiment of Figure 1.

**Claims**

1. A process for converting a $C_1$—$C_4$ monohydric alcohol or a related oxygenate into a product selected from those comprising predominantly gasoline boiling range hydrocarbons and those comprising predominantly olefinic hydrocarbons, which comprises the steps of

contacting in a reactor a feed comprising the alcohol or related oxygenate with a catalyst comprising a ZSM-5 type zeolite as a dense fluidized bed of catalyst particles;

continuously passing a mixture of catalyst particles, reaction products and unreacted feed from the reactor to a separate stripper/separator vessel separating catalyst particles from reaction products and unreacted feed;

stripping from the catalyst paraffin, olefin, naphthene and aromatic products of the reaction, absorbed on or entrained in the catalyst particles; and

continuously passing stripped catalyst particles to the dense fluidized bed,

8

**0 091 751**

characterized in that conditions in the dense fluidized bed approach plug flow conditions, that at least 80% of the reactor volume is occupied by the dense fluidized bed and that catalyst and reaction products are removed together from the reactor.

2. A process according to claim 1, wherein from 95 to 100% of the reactor volume is occupied by the dense fluidized bed.

3. A process according to claim 1 or claim 2, wherein the reactor has a freeboard region of 0 to 1.5 m (0 to 5 feet).

**Patentansprüche**

1. Verfahren zur Umwandlung eines einwertigen $C_1$—$C_4$-Alkohols oder einer verwandten sauerstoffhaltigen Verbindung in ein Produkt, das aus denen, die vorherrschend Kohlenwasserstoffe im Benzinsiedebereich umfassen und aus denen, die vorherrschend olefinische Kohlenwasserstoffe umfassen, ausgewählt ist, wobei das Verfahren die Stufen umfaßt:

Inkontaktbringen einer Zufuhr, die den Alkohol oder eine verwandte sauerstoffhaltige Verbindung enthält, mit einem Katalysator, der einen Zeolit vom Typ ZSM-5 umfaßt, als dichte Wirbelschicht von Katalysatorpartikeln in einem Reaktor,

kontinuierliches Leiten der Mischung von Katalysatorpartikeln, Reaktionsprodukten und unreagierter Zufuhr aus dem Reaktor zu einem abgetrennten Stripping/Abtrenn-Gefäß, wobei die Katalysatorpartikel von den Reaktionsprodukten und der unreagierten Zufuhr abgetrennt werden,

Strippen von Paraffin, Olefin, Napthen und aromatischen Reaktionsprodukten, die auf den Katalysatorpartikeln absorbiert sind oder in diese eingedrungen sind, von dem Katalysator und

kontinuierliches Leiten der abgestreiften Katalysatorpartikel zur dichten Wirbelschicht, dadurch gekennzeichnet, daß sich die Bedingungen in der dichten Wirbelschicht idealen Strömungsbedingungen nähern, daß mindestens 80% des Reaktorvolumens durch die dichte Wirbelschicht eingenommen werden und daß der Katalysator und diese Reaktionsprodukte zusammen aus dem Reaktor entfernt werden.

2. Verfahren nach Anspruch 1, worin von 95 bis 100% des Reaktorvolumens durch die dichte Wirbelschicht eingenommen werden.

3. Verfahren nach Anspruch 1 oder 2, worin der Reaktor einen Freiraumbereich von 0 bis 1,5 m (0 bis 5 Feet) aufweist.

**Revendications**

1. Un procédé de conversion des mono-alcools en $C_1$—$C_4$ ou des composés oxygénés apparentés en un produit choisi parmi ceux comprenant de façon prédominante des hydrocarbures dont l'intervalle de point d'ébullition correspond à celui de l'essence et ceux comprenant de façon prédominante des hydrocarbures oléfiniques, qui comprend les étapes suivantes:

— mise au contact dans un réacteur d'une charge comprenant l'alcool ou le composé oxygéné apparenté avec un catalyseur comprenant une zéolite de type ZSM-5, sous forme d'un lit fluidisé dense de particules catalytiques;

— circulation en continu d'un mélange de particules catalytiques, de produits de réaction et de la charge n'ayant pas réagi à partir du réacteur dans une cuve ou enceinte séparée comprenant un séparateur et un agent d'extraction par entraînement pour séparer les particules catalytiques des produits de la réaction et de la charge n'ayant pas réagi;

— extraction par entraînement du catalyseur des produits paraffiniques, oléfiniques, naphténiques et aromatiques de la réaction adsorbés sur ou entraînés dans les particules catalytiques; et

— circulation continue des particules catalytiques épurées vers le lit fluidisé dense,

procédé caractérisé en ce que les conditions dans le lit fluidisé dense s'approchent des conditions d'écoulement idéales, en ce qu'au moins 80% du volume du réacteur est occupé par le lit fluidisé dense et en ce que le catalyseur et les produits de la réaction sont retirés en même temps du réacteur.

2. Un procédé selon la revendication 1, dans lequel le lit fluidisé dense occupe entre 95 et 100% du volume du réacteur.

3. Un procédé selon la revendication 1 ou 2, dans lequel il existe dans le réacteur une région d'espace libre de 0 à 1,5 m (0 à 5 pieds).

9

FIG. 1

1

FIG. 2